# EUROPÄISCHE PATENTSCHRIFT

(11) **EP 1 302 805 B1**
(45) Veröffentlichungstag und Bekanntmachung des Hinweises auf die Patenterteilung: **24.08.2005**
(21) Anmeldenummer: 02102427.8
(22) Anmeldetag: 10.10.2002
(51) Int. Cl.: G02B 21/00, G02B 21/06

(54) **MIkroskop mit Vorrichtung zur Regelung der Helligkeit einer Lichtquelle und automatischem Lampenwechsler**
Microscope with control of the intensity of the light source and automatic lamp replacement
Microscope avec réglage de l'intensité de la source lumineuse et dispositif pour remplacer la source automatiquement

(30) Priorität: 11.10.2001 DE 10150270
(43) Veröffentlichungstag der Anmeldung: 16.04.2003
(73) Patentinhaber: Leica Microsystems (Schweiz) AG, 9435 Heerbrugg (CH)
(72) Erfinder: SANDER, Ulrich, 9445, Rebstein (CH)
(74) Vertreter: Rosenich, Paul

(56) Entgegenhaltungen:
- DE-A- 19 824 423
- US-A- 4 657 013
- US-A- 4 707 609
- US-A- 5 861 944
- US-B1- 6 362 573
- PATENT ABSTRACTS OF JAPAN vol. 1996, no. 10, 31. Oktober 1996 (1996-10-31) -& JP 08 146303 A (SHARP CORP), 7. Juni 1996 (1996-06-07) -& DATABASE WPI Derwent Publications Ltd., London, GB; AN 1996-324754 XP002230532 & JP 08 146303 A (SHARP KK), 7. Juni 1996 (1996-06-07)
- PATENT ABSTRACTS OF JAPAN vol. 1995, no. 04, 31. Mai 1995 (1995-05-31) & JP 07 022797 A (MATSUSHITA ELECTRIC IND CO LTD), 24. Januar 1995 (1995-01-24)

## Beschreibung

Die Erfindung betrifft eine Lichtquelle zur Beleuchtung in einer beziehungsweise für eine optische(n) Betrachtungseinrichtung, beispielsweise ein Mikroskop.

Bei den heute üblichen Beleuchtungseinrichtungen für Operationsmikroskope werden meist Halogenlampen zur Objektfeldbeleuchtung eingesetzt. Diese haben einerseits eine begrenzte Lebensdauer bis zum Totalausfall, andererseits nimmt die Helligkeit der Lampe im Laufe ihres Lebensalters durch auf den Lampenkolben aufgedampftes Wendelmaterial drastisch ab.

Aus der US 4,657,013 ist es bekannt, einen Dosismesser zum Patientenschutz einzusetzen, um eine übermäßige Bestrahlung des Patienten zu vermeiden. Um sich vor einem Totalausfall der Lampe mit unabsehbaren Folgen während einer Operation zu schützen, wird in dem Zeiss-Prospekt: "OPMI® VISU 200 für die Ophthalmologie", Druckschriften-Nr.: 30-251-d, Publikations-Vermerk: IV/98, April 1998, vorgeschlagen, einen Lampenwechsler einzusetzen, welcher beim Ausfall der ersten Lampe unverzüglich auf eine Ersatzlampe umschaltet.

Um die Lebensdauer bei Xenon-Lampen, welche ebenso in Mikroskopbeleuchtungen eingesetzt werden, zu verfolgen, werden Betriebsstundenzähler eingesetzt. Diese sollen es dem Bedienpersonal ermöglichen, nach Ablauf einer bestimmten Betriebsstundenanzahl die Lampe zu wechseln, so dass sie nicht unerwartet ausfällt.

JP 08 146303 offenbart.ein Verfahren zum Wechseln einer Lampe in einem Mikroskop, bei dem die Intensität der Beleuchtung von einer Photodiode gemessen wird und bei Unterschreiten eines festgelegten Referenzwertes den Benutzer visuell und akustisch warnt. Weiterhin offenbart die JP 08 146303 ein Mikroskop mit einer Beleuchtungseinrichtung, das eine Photodiode zur Messung der Beleuchtungsintensität enthält, die über ein Mikrocomputer mit einer Anzeige verbunden ist. In ähnlicher Weise wird dies durch die US 4,707,609, die JP 07 022797 und die US 5,861,944 offenbart.

Der Erfinder erkannte, dass die bekannten Systeme nachteilig sind in Bezug auf die folgenden Punkte:
a) Der Operateur (Chirurg) beklagt sich ab einer bestimmten Alterung der Lampe zu Recht über einen Mangel an Helligkeit im Operationsfeld, obwohl alle Versorgungssysteme (Elektronik, Lichtleiter, optische Einkoppelung ins Mikroskop) in Ordnung sind.
b) Dies kann sogar so weit führen, dass das gesamte Mikroskop als schlecht und unbrauchbar bezeichnet wird.
c) Hinweise in den Gebrauchsanweisungen, die diesen Effekt darstellen, werden in der Praxis kaum zur Kenntnis genommen oder sind im entscheidenden Moment während der Hektik einer Operation auch oftmals nicht wissentlich vorhanden.
d) Um den Helligkeitsverlust auszugleichen, wird in der Regel einfach die Spannung durch Drehen des Potentiometers beziehungsweise des Lichtreglers erhöht. Dies kann beim Lampenwechseln zu einem Helligkeitsschock führen, da die neue unverbrauchte Lampe mit der gleich eingestellten Spannung wesentlich heller leuchtet als die verbrauchte. Im Ophthalmobereich kann dies zu Schädigungen des Patientenauges führen.
e) Mit Ausnahme des Betriebsstunden-Zählersystems ist es dem Wartungspersonal nicht möglich, vorherzusagen, wann eine Lampe getauscht werden soll, bevor sie in einem ungünstigen Moment ausfällt.
f) Betriebsstundenzähler sind nur für durchschnittliche Lampenleistungen ausgerichtet und geben den echten Lampenwechsel-Bedarf nicht an.

Aufgabe der Erfindung ist es nun, eine Vorrichtung zu schaffen, welche die Lichtquelle, beispielsweise eine Halogenlampe, über die gesamte Lebensdauer überwacht und dem Chirurgen beziehungsweise dem Wartungspersonal frühzeitig den Bedarf eines Lampenwechsels anzeigt, ohne die Betriebsstunden zählen zu müssen. Gelöst wird diese Aufgabe durch das in Anspruch 1 beschriebene Verfahren beziehungsweise die in Anspruch 2 beschriebene Vorrichtung:

Mittels eines Überwachungssensors wird die tatsächliche Lichtleistung der Lampe überwacht. Eine Abnahme der Lampenleistung über die Zeit ihres Einsatzes gibt dem Sensor an, wann sich der Zustand der Lampe einer kritischen Phase nähert. Das Erreichen der kritischen Phase wird dem Anwender beziehungsweise dem Wartungspersonal signalisiert.

Bei den heute üblichen Beleuchtungsaufbauten wird das häufig von Kaltlichtspiegellampen erzeugte Licht auf einen Lichtleitereingang fokussiert. Der Lichtleiter transportiert das Licht über eine Optik im Mikroskop auf das Operationsfeld. Der tatsächliche Lichtkegel der Kaltlichtlampe ist jedoch größer als der Lichtleitereingang, zum Rand hin jedoch lichtschwächer. Dieser Anteil des Lichtkegels wird erfindungsgemäß durch einen Lichtsensor, der sich neben dem Lichtleiter befindet, ausgenutzt und hinsichtlich der Lichthelligkeit laufend gemessen.

Das Signal des Sensors wird in herkömmlicher Weise einer signalverarbeitenden Elektronik zugeführt. Wenn nun ein Schwellenwert in der Lichtreduktion oder -steigerung, der vorzugsweise frei wählbar und gegebenenfalls an der Elektronik einstellbar ist, erreicht wird, respektive die Lichtintensität unter einen bestimmten Wert fällt beziehungsweise einen bestimmten Wert übersteigt, wird eine optische Anzeige und/oder ein akustisches Signal aktiviert. Diese(s) zeigt(en) an, dass die ausgestrahlte Lichtmenge zum Operieren nicht mehr ausreichend ist und ein Lampenwechsel vorgenommen werden sollte. Das Signal kann wird dazu benutzt, den Lampenwechsel automatisch zu steuern. Jetzt könnte beispielsweise auch ein Lampenwechsler bedient werden oder die Lampe auch in herkömmlicher Weise ausgetauscht werden.

Als besondere Weiterentwicklung ist eine Kalibriervorrichtung in die Elektronikeinheit integriert, welche es erlaubt, den Messwert einer neuen Lampe auf den Wert 100% zu setzen, um dann den Schwellenwert der Lichtreduktion in Prozenten, beispielsweise 60%, einzugeben.

Die entsprechenden Messungen und Berechnungen werden durch die Elektronik auf die gegebenenfalls vorhandene Regulierspannung gestützt, um die Messungen beziehungsweise Berechnungen zu objektivieren.

Die Anzeige kann beispielsweise als rot blinkendes Signallicht, als Signalton oder als Messwert auf einem Instrument (Skala), vorzugsweise an der Lampenelektronik des Mikroskops, ausgebildet sein. Möglich ist es auch, die Anzeige dem Operateur direkt im Zwischenbild des Operationsmikroskops über eine bereits bekannte beziehungsweise vorhandene Einspiegelungsvorrichtung sichtbar zu machen.

In einem weiteren Ausführungsbeispiel ist der Lichtsensor statt neben dem Lichtwellenleiter hinter dem Kaltlichtspiegel der Lampe angeordnet. Da die verwendeten Spiegel nur im sichtbaren Bereich reflektieren, im übrigen Spektralbereich das Licht jedoch durchlassen, ist auch hier eine Messung - allerdings in einem anderen Spektralbereich - möglich. Da der Spektralbereich (Wärmestrahlung) jedoch direkt proportional der Lichtleistung am Glühfaden ist, ist dieser bevorzugte Aufbau gut geeignet.

Durch die vorgängig beschriebene Verbesserung an Lichtquellen unter Einsatz einer Vorrichtung zur Überwachung der Lichtquelle einer optischen Betrachtungseinrichtung werden die folgenden Vorteile erreicht:
- Der Beobachter wird rechtzeitig informiert, wenn die Lichtintensität der Lichtquelle nicht mehr der Anfangsintensität entspricht bzw. sich einem vorgegebenen Abschwächungs-Schwellenwert nähert.
- Es erfolgt eine frühzeitige Signalisierung, wenn sich die Lampe einem Totalausfall nähert.
- Es besteht die Möglichkeit des Austauschs der Lampe vor dem Totalausfall, was einem zusätzlichen Sicherheitsaspekt entspricht.
- Eine Eigenkontrolle bzw. -überwachung der Beleuchtungsvorrichtung des Mikroskops ist realisiert.
- Es besteht die Möglichkeit, die Beleuchtungsintensität mittels eines Regelkreises über einen bestimmten Lebensdauerabschnitt der Lampe konstant zu halten.

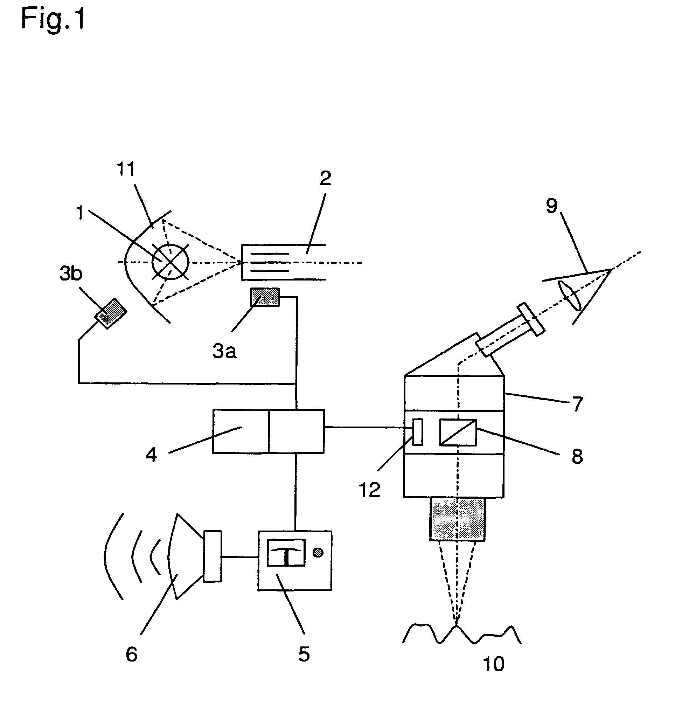

Die Erfindung wird nunmehr an Hand einer Zeichnung näher erläutert.
Die einzige Figur zeigt den schematischen Aufbau einer erfindungsgemäßen Beleuchtungsvorrichtung für ein Mikroskop 7, beispielsweise für ein Stereo-Operationsmikroskop, mit einer Lampe 1, einem Lichtwellenleiter 2, einem Kaltlichtspiegel 11 zur Fokussierung des von der Lampe 1 erzeugten Lichtes auf den Eingang des Lichtwellenleiters 2. Es werden weiter die erfindungsgemäßen Lichtsensoren 3a,3b zur Messung der Intensität des von Lampe 1 erzeugten Lichts, eine Elektronikeinheit 4, eine Anzeige und Helligkeitseinstellung 5, ein akustischer Signalgeber 6, eine der Einspiegelung in das Mikroskop 7 dienende Einspiegelungseinheit 8, eine Anzeigeeinheit 12 für den Beobachter 9 und das Objekt 10 dargestellt.

Die Lichtsensoren 3a,3b können gleichzeitig oder auch alternativ angeordnet sein. Die Erfindung umfasst auch Varianten, bei denen der Sensor am oder in der Nähe des Objekts im Lichtkegel der Beleuchtung angeordnet ist, um allfällige Einflüsse des Lichtwellenleiters mitzuberücksichtigen. Der dargestellte akustische Signalgeber 6 kann beliebige Formen und Ausführungen haben; eine energetisch günstige Ausbildung wäre beispielsweise ein Piezosummer. Die Anzeige bzw. das Signalhorn können gemeinsam oder alternativ vorgesehen sein. Der Anbringungsort dieser Bauteile ist je nach Anwenderbedarf wählbar; er kann direkt beim Mikroskop 7 oder auch direkt am Gehäuse der Lichtquelle 1 sein.

Das von der Lampe 1 erzeugte Licht wird über einen Kaltlichtspiegel 11 auf den Lichtwellenleiter 2 gebündelt. Da diese Bündelung nicht vollständig auf die Eingangsfläche des Lichtwellenleiters 2 erfolgt, kann neben dem Lichtwellenleiter 2 über einen Sensor 3a die Intensität der Lampe 1 erfasst werden. Diese Erfassung wird in elektrische Signale umgewandelt und einer Elektronikeinheit 4 zugeführt. Innerhalb dieser Einheit werden diese Signale mit einem bestimmten, vorgebbaren Schwellenwert verglichen. Bei Unter- bzw. Überschreitung dieses Wertes wird dieser Umstand dem Beobachter 9 mittels einer Anzeige 5 und/oder eines akustischen Signals eines Signalgebers 6 und/oder einer Anzeigeinheit 12 am Mikroskop 7 mitgeteilt. Der Anwender entscheidet dann, ob er die Lampe 1 sofort wechseln möchte oder noch einige Zeit weiter arbeitet und danach die Lampe manuell oder über einen Lampenwechsler wechselt.

In einer Variante zu der oben beschriebenen Anordnung ist der Lichtsensor 3b auf der Rückseite des Kaltlichtspiegels 11 angeordnet. Da der Kaltlichtspiegel nur die visuellen Wellenlängenbereiche reflektiert, nicht aber diejenigen im nicht-visuellen Bereich, ist eine Intensitätsmessung auch hier möglich.

Weiterhin ist eine Elektronikeinheit 4 mit einem Regelkreis ausgestattet, um die Lichtintensität der Lampe 1 über einen gewissen Lebensdauerabschnitt konstant zu halten. Damit steht dem Anwender am Objekt - in Abhängigkeit der von ihm gewählten Potentiometereinstellung - stets die gleiche Leuchtdichte zur Verfügung, was sich für den Anwender operationstechnisch günstig auswirkt.

Im obigen Text wird zwar auf ein Operationsmikroskop näher Bezug genommen; die Erfindung ist jedoch nicht darauf eingeschränkt, sondern ist in entsprechender Weise auch bei anderen Beleuchtungsvorrichtungen - z.B. Projektoren, Beleuchtungen für Video- und Fotokameras, etc. - einsetzbar.

### Bezugszeichenliste

- 1: Lampe
- 2: Lichtwellenleiter
- 3a, 3b: Lichtsensor(en)
- 4: Elektronikeinheit
- 5: Anzeige und Helligkeitseinstellung
- 6: akustischer Signalgeber
- 7: Mikroskop
- 8: Einspiegelungseinheit
- 9: Beobachter
- 10: Objekt
- 11: Kaltlichtspiegel
- 12: Anzeigeeinheit

## Patentansprüche

1. Verfahren zum Wechseln einer Lampe (1) in einer elektrischen Lichtquelle in einem Mikroskop (7), bei dem von der Lichtquelle abgegebenes Licht in seiner Intensität laufend gemessen wird und eine Elektronikeinheit (4) bei Unter- oder Überschreitung eines bestimmten Lichtintensitäts- Schwellenwerts ein Signal generiert, **dadurch gekennzeichnet, dass** um eine konstante Lichthelligkeit zu erreichen, ein Regelkreis in der Elektronikeinheit (4) vorhanden ist, der die Helligkeit der Lampe (1) über einen gewissen Lebensdauerabschnitt konstant hält **und dass** das Signal durch einen Lampenwechsler mit einer Reservelampe zu einem automatischen Lampenwechsel führt.

2. Mikroskop (7) mit einer Lichtquelle mit wenigstens einer Lampe (1) mit wenigstens einem Lichtsensor (3) zur Intensitätsmessung des von der Lampe (1) abgegebenen Lichts und einer Elektronikeinheit (4), die bei Unter- oder Überschreitung eines bestimmten Lichtintensitäts-Schwellenwerts ein Signal generiert, und mit einem automatischen Lampenwechster mit Reservelampe, **dadurch gekennzeichnet, dass** um eine konstante Lichthelligkeit zu erreichen, ein Regelkreis in der Elektronikeinheit (4) vorhanden ist, der die Helligkeit der Lampe (1) über einen gewissen Lebensdauerabschnitt konstant hält **und dass** das Signal aus der Elektronikeinheit (4) den automatischen Lampenwechsier mit einer Reservelampe ansteuert.

3. Mikroskop nach Anspruch 2, **dadurch gekennzeichnet, dass** ein Schwellenwert für die Leuchtdichte bzw. Leuchtintensität der Lampe (1) durch den Anwender einstellbar ist.

4. Mikroskop nach einem der Ansprüche 2 oder 3, **dadurch gekennzeichnet, dass** der Sensor über die Elektronikeinheit mit einer Anzeige für den Anwender verbunden ist **und dass** die Anzeige einen akustischer Signalgeber und/oder ein analoges und/oder digitales Display, eine Leuchte oder dergleichen und/oder eine am Mikroskop angebrachte Anzeigeeinheit umfasst.

5. Mikroskop nach einem der Ansprüche 2 bis 4, **dadurch gekennzeichnet, dass** die Anzeige über eine bereits bekannte Einspiegelungseinheit (8) direkt in das Zwischenbild des Mikroskops (7) einspiegelbar ist.

6. Mikroskop nach einem der Ansprüche 2 bis 5, **dadurch gekennzeichnet, dass** die Lampe (1) einen Kaltlichtspiegel (11) umfasst und das Licht zum Transport auf ein Operationsfeld auf einen Lichtwellenleiter (2) fokussiert wird.

7. Mikroskop nach einem der Ansprüche 2 bis 6, **dadurch gekennzeichnet, dass** der Sensor (3a) neben einem Eingang eines Lichtwellenleiters (2) angeordnet ist.

8. Mikroskop nach einem der Ansprüche 2 bis 7, **dadurch gekennzeichnet, dass** der Sensor (3b) hinter dem Kaltlichtspiegel (11) angeordnet ist und die Intensität des Lichtspektrums hinter dem Kaltlichtspiegel (11) misst.

9. Mikroskop nach einem der Ansprüche 2 bis 8, **dadurch gekennzeichnet, dass** eine Kalibriereinrichtung in die Elektronikeinheit (4) integrierbar ist, welche es erlaubt, den Messwert einer neuen Lampe auf den Wert 100% zu setzten, um dann den Schwellenwert der Lichtreduktion in Prozenten einzugeben und damit bei einem Lampenwechsel auf dem gleichen Helligkeitsniveau weiterzuarbeiten.

## Claims

1. Method for changing a lamp (1) in an electrical light source in a microscope (7), in which the intensity of light emitted by the light source is continuously measured and an electronic unit (4) generates a signal when a certain light intensity threshold value is not reached or is exceeded, **characterized in that** a control circuit is present in the electronic unit (4) for achieving a constant brightness of the light, which control circuit keeps the brightness of the lamp (1) constant over a certain lifespan, and **in that** the signal leads to an automatic lamp change by means of a lamp changer with a reserve lamp.

2. Microscope (7) comprising a light source having at least one lamp (1), and comprising at least one light sensor (3) for intensity measurement of the light emitted by the lamp (1) and an electronic unit (4) which generates a signal when a certain light intensity threshold value is not reached or is exceeded, and comprising an automatic lamp changer with reserve lamp, **characterized in that** a control circuit is present in the electronic unit (4) for achieving a constant brightness of the light, which control circuit keeps the brightness of the lamp (1) constant over a certain lifespan, and **in that** the signal from the electronic unit (4) actuates the automatic lamp changer with a reserve lamp.

3. Microscope according to Claim 2, **characterized in that** a threshold value for the luminance or luminous intensity of the lamp (1) can be set by the user.

4. Microscope according to either of Claims 2 and 3, **characterized in that** the sensor is connected via the electronic unit to an indicator for the user, and **in that** the indicator comprises an acoustic signal generator and/or an analogue and/or digital display, a lamp or the like and/or a display unit mounted on the microscope.

5. Microscope according to any of Claims 2 to 4, **characterized in that** the indicator can be reflected directly into the intermediate image of the microscope (7) by means of a known reflecting-in unit (8).

6. Microscope according to any of Claims 2 to 5, **characterized in that** the lamp (1) comprises a cold-light reflector (11) and the light is focused onto an optical fibre (2) for transport to an operation field.

7. Microscope according to any of Claims 2 to 6, **characterized in that** the sensor (3a) is arranged adjacent to an entrance of an optical fibre (2).

8. Microscope according to any of Claims 2 to 7, **characterized in that** the sensor (3b) is arranged behind the cold-light reflector (11) and measures the intensity of the light spectrum behind the cold-light reflector (11).

9. Microscope according to any of Claims 2 to 8, **characterized in that** calibration means can be integrated into the electronic unit (4), which calibration means makes it possible to set the measured value of a new lamp to the value 100% in order then to input the threshold value of the light reduction in percent and hence to continue working at the same brightness level in the case of a lamp change.

## Revendications

1. Procédé pour remplacer une lampe (1) d'une source lumineuse dans un microscope (7), dans lequel l'intensité de lumière émise par la source lumineuse est couramment mesurée, et une unité électronique (4) génère un signal en cas d'un écart en moins ou en plus d'un certain valeur de seuil de l'intensité lumineuse, **caractérisé en ce, que** pour atteindre une luminosité constante, un circuit de réglage est présent dans l'unité électronique (4), qui maintient la luminosité de la lampe (1) constante pendant une certaine période de sa durabilité, et que le signal amène un remplacement de lampe automatique par une lampe de réserve au moyens d'un échangeur de lampe.

2. Microscope (7) avec une source lumineuse, qui inclut au moins une lampe (1), comprenant au moins un capteur de lumière (3) pour mesurer l'intensité de la lumière émise par la lampe (1), et une unité électronique (4), qui génère un signal en cas d'un écart en moins ou en plus d'un certain valeur de seuil de l'intensité lumineuse, et un échangeur automatique de lampe avec une lampe de réserve, **caractérisé en ce que** pour atteindre une luminosité constante, un circuit de réglage est présent dans l'unité électronique (4), qui maintient la luminosité de la lampe (1) constante pendant une certaine période de sa durabilité, et que le signal de l'unité électronique (4) commande l'échangeur automatique de lampe avec une lampe de réserve.

3. Microscope selon la revendication 2, **caractérisé en ce qu'**un valeur de seuil de la luminance ou de l'intensité lumineuse de la lampe (1) est ajustable par l'utilisateur.

4. Microscope selon une quelconque des revendications 2 ou 3, **caractérisé en ce que** le capteur est relié à un indicateur pour l'utilisateur au moyens de l'unité électronique, et que l'indicateur comprend un dispositif transmetteur des signaux acoustiques et/ou un display analogue et/ou digital, une lampe ou pareil et/ou une unité d'affichage attaché au microscope.

5. Microscope selon une quelconque des revendications 2 à 4, **caractérisé en ce que** l'affichage peut être superposé directement dans l'image intermédiaire du microscope (7) par un dispositif de réflexion (8) déjà connu.

6. Microscope selon une quelconque des revendications 2 à 5, **caractérisé en ce que** la lampe (1) comprend un miroir à lumière froide (11), et que la lumière est focalisée sur un guide d'ondes lumineuses (2) pour le transport à un champ d'opération.

7. Microscope selon une quelconque des revendications 2 à 6, **caractérisé en ce que** le capteur (3a) est disposé à côté d'une entrée du guide d'ondes lumineuses (2).

8. Microscope selon une quelconque des revendications 2 à 7, **caractérisé en ce que** le capteur (3b) est disposé derrière le miroir à lumière froide (11) et mesure l'intensité du spectre lumineuse derrière le miroir à lumière froide (11).

9. Microscope selon une quelconque des revendications 2 à 8, **caractérisé en ce qu'**un dispositif de calibrage peut être intégré dans l'unité électronique (4), qui permet d'ajuster le valeur de mesure d'une nouvelle lampe au valeur de 100%, pour introduire après le valeur seuil de la réduction lumineuse en pour-cent, et pour continuer à travailler ainsi lors d'un remplacement de lampe au même niveau lumineux.
